# EUROPÄISCHE PATENTSCHRIFT

(11) **EP 1 188 635 B1**
(45) Veröffentlichungstag und Bekanntmachung des Hinweises auf die Patenterteilung: **02.05.2007**
(21) Anmeldenummer: 01120605.9
(22) Anmeldetag: 29.08.2001
(51) Int. Cl.: B60T 17/18, B60T 15/20, B60T 13/68, B60T 13/66, B60T 13/26, B60T 8/32, B60T 8/18, B60T 15/24

(54) **Anhängerbremsventil für einen Anhänger mit elektronischer Bremsregelung**
Trailer brake valve for a trailer with electronic brake control
Soupape de freinage de remorque muni d'un système de commande de frein électronique

(30) Priorität: 14.09.2000 DE 10045415; 13.08.2001 DE 10139748
(43) Veröffentlichungstag der Anmeldung: 20.03.2002
(73) Patentinhaber: WABCO GmbH, 30453 Hannover (DE)
(72) Erfinder: Frank, Dieter, 30171 Hannover (DE); Koch, Jürgen, 30823 Garbsen (DE); Lindemann, Klaus, 30989 Gehrden (DE); Reinefeld, Wilfried, 30457 Hannover (DE); Sieker, Armin, 33611 Bielefeld (DE); Stender, Axel, 31787 Hameln (DE); Witte, Norbert, 31867 Lauenau (DE); Wolff, Hans-Klaus, 31832 Springe (DE)
(74) Vertreter: Schrödter, Manfred

(56) Entgegenhaltungen:
- DE-A- 19 818 982
- US-A- 3 837 361
- US-A- 4 002 374
- US-A- 4 080 004

## Beschreibung

Die Erfindung betrifft eine Ventileinrichtung gemäß dem Oberbegriff des Patentanspruchs 1.

Ein derartiges Anhängerbremsventil ist aus der DE 28 10 850 A1 bekannt.

Bei dem bekannten Anhängerbremsventil für eine Zweileitungs-Druckmittelbremsanlage wird ein über den Kupplungsschlauch "Bremse" eingespeistes pneumatisches Bremssignal luftmengenverstärkt über ein im Anhängerbremsventil enthaltenes Relaisventil [dort Steuerdruckkammer (6), Relaiskolben (5), Relaiskolben-Fortsatz (28), Auslaßventil (26, 28), Einlaßventil (26, 27), Bremsdruckkammer (8)] als Bremsdruck an den Bremszylinder-Anschlüssen [dort (9), (10)] für die Bremszylinder ausgegeben.

Als weitere Funktion ist die Abrißsicherung für den Kupplungsschlauch "Vorrat" implementiert; wird der Anschluß für die Vorratsluft [dort automatischer Bremsanschluß (20)] drucklos, so wird der Notbremskolben [dort (22)] auf seiner Oberseite drucklos und der an seiner Unterseite anliegende Vorratsbehälterdruck schiebt ihn nach oben, so daß zunächst das Auslaßventil [dort (26, 28)] schließt und in der weiteren Aufwärtsbewegung das Einlaßventil [dort (26, 27)] geöffnet wird, so daß der am Vorratsbehälter-Anschluß [dort (33)] anstehende Druck auch in die Bremskammer übertragen wird und an den Bremszylinder-Anschlüssen anliegt.

In dem Anhängerbremsventil ist weiter die Funktion einer Voreilung des an die Bremszylinder übertragenen Bremsdruckes gegenüber dem pneumatischen Bremssignal integriert.

Bei der Realisierung eines Anhängerbremsventiles entsprechend der bekannten Schrift muß darauf geachtet werden, daß die konstruktionsbedingte Hysterese des Relaisventiles genügend klein wird, um sie tolerieren zu können. Hierzu muß eine gewisse Mindestbaugröße für den Relaiskolben gewählt werden, um den Einfluß der Reibkräfte, z. B. den Reibkraft-Einfluß durch die Kolbendichtung, zu reduzieren. Da die Baugröße eines derartigen Ventils die Kosten zumindest stark mitbestimmt, können diese bei diesem Konstruktionsprinzip nicht so stark reduziert werden, wie man dies eigentlich wünscht.

Aus der DE 30 31 105 A1 ist eine lastabhängig geregelte Zweileitungs-Anhängerbremsanlage bekannt, die aus einem als Sitzventil aufgebauten Notbremsventil [dort (3)] und einem lastabhängig gesteuerten Bremskraftregler [dort (5)] besteht, wobei dieser als Kombination von einem lastabhängig wirkenden Steuerteil mit einem luftmengenverstärkenden Relaisventil ausgebildet ist. Das Notbremsventil entspricht in seiner Funktionsweise der Abrißfunktion in einem üblichen Anhängerbremsventil, so daß die Funktion beider Ventile sinngemäß als die Funktion eines Anhängerbremsventiles mit lastabhängig gesteuerter Bremskraftregelung verstanden werden kann. Dies gilt vor allem, da auch ein Anhängerbremsventil z. B. nach der erstgenannten Schrift durch die Kombination dieser Ventile ersetzt werden kann [in beiden Fällen sind die Bremszylinder direkt mit dem Anhängerbremsventil bzw. mit der Kombination aus beiden Ventilen verbunden]. Diese Schrift zeigt wie auch die letztgenannte Schrift beispielhaft, daß zusammen mit Anhängerbremsventilen auch andere Funktionen verknüpft sein können, die als solche nicht die eigentliche Grundfunktion eines Anhängerbremsventiles, nämlich vereinfacht im wesentlichen diejenige der Abrißsicherung, betreffen.

Aus der DE 32 07 793 C2 ist bekannt, in einer 2-Leitungs-Wagenzugbremsanlage zusätzlich einen Drucksensor [dort (18)] vorzusehen, der über eine Zweigleitung [dort (17)] mit der Anhänger-Bremsleitung [dort (15)] für das Anhängerbremsventil [dort (10)] verbunden ist. Unter Verwendung des elektrischen Drucksensor-Signals wird in einer elektronischen Schalteinrichtung [dort (20)], zusammen mit anderen Sensorsignalen, ein Regelsignal erzeugt, das in einem Drucksteuerventil [dort (14)] einen Bremsdruck für die Anhänger-Bremszylinder erzeugt. Durch das schnelle Durchschalten der Elektrik ist der so erzeugte Bremsdruck zeitlich voreilend gegenüber dem vom Anhängerbremsventil pneumatisch erzeugten Bremsdruck.

Die EP 0 586 203 B1 offenbart eine elektronische Bremsregelung für einen Anhänger in Form einer Konfiguration von Ventilen mit ihrer Ansteuerung durch eine elektronische Steuereinrichtung; dabei sind als mögliche Alternativen unterschiedliche Ventilkonfigurationen für konzeptionell unterschiedliche Varianten der Steuereinrichtung beschrieben. Die Schrift zeigt pneumatische Schaltungen für typische Funktionen eines Anhängerbremsventiles bei verschiedenen Steuereinrichtungs-Varianten [dort z. B. emergency transducer valve (119) im weiteren und fluid energy supply means (136) im engeren Sinne]. Hinweise zur konstruktiven Ausgestaltung derartiger Ventileinrichtungen für EBS-Anlagen sind in der Schrift nicht enthalten.

Bei einem Anhänger mit elektronischer Bremsregelung wird die Regelung des Bremsdruckes in den Bremszylindern einer Fahrzeugachse von der hierfür vorgesehenen Bremsregelelektronik vorgenommen, welche auch z. B. im Falle eines ABS-Regeleingriffes mit unterschiedlichen Reibverhältnissen auf beiden Fahrzeugseiten den Bremsdruck in den Bremszylindern auf der linken Fahrzeugseite unterschiedlich zu dem Bremsdruck in den Bremszylindern auf der rechten Fahrzeugseite aussteuert. Ebenso wird der Bremsdruck von der Bremsregelelektronik z. B. abhängig von der Beladung variiert. Für eine derartige lastabhängige Bremsung wird die Beladung z. B. über eine Druckmessung in einem Luftfederbalg ermittelt und der Bremsregelelektronik mitgeteilt, welche dann den Bremsdruck in den Bremszylindern des Anhängers entsprechend modifiziert. Für die Erzeugung des Bremsdruckes ist ein Bremsdruckmodulator vorgesehen, welcher aus elektrisch ansteuerbaren Ventilen besteht, die üblicherweise in taktender Betriebsweise von der Bremsregelelektronik angesteuert werden und als Pilotventile zur Erzeugung eines Steuerdrucks in der Steuerkammer eines Relaisventiles dienen, welches den Steuerdruck luftmengenverstärkt als Bremsdruck über seinen Ausgang an einen oder mehrere Bremszylinder abgibt; hierbei können ein oder mehrere derartig aufgebaute Bremsregelkanäle implementiert sein.

Ein Anhängerbremsventil für den Einsatz in einem Anhänger mit elektronischer Bremsregelung braucht daher weder über die Funktion der Luftmengenverstärkung noch über Sonderfunktionen wie z. B. die erwähnte Funktion einer Voreilung oder diejenige einer lastabhängigen Modifizierung des Bremsdruckes zu verfügen. Für ein solches Anhängerbremsventil ist es völlig ausreichend, wenn die Grundfunktionen, nämlich die Bereitstellung des vom Zugfahrzeug übertragenen Bremsvorgabedruckes, die Abrißsicherung sowie die Möglichkeit des Anschlusses von Löseventilen [für das Lösen von im entkoppelten Zustand eingebremsten Achsen] realisiert sind.

Der Erfindung liegt deshalb die Aufgabe zugrunde, für ein Anhängerbremsventil nach der erstgenannten bekannten Schrift eine Ventilkonstruktion anzugeben, die entsprechend den reduzierten Anforderungen des Einsatzes des Anhängerbremsventiles in einem Anhänger mit elektronischer Bremsregelung vereinfacht ist, damit die Herstellkosten des Anhängerbremsventiles reduziert sind.

Aus der US 3,837,361 ist ein Bremssteuergerät für ein Anhängefahrzeug bekannt, das ein Notbremssteuerventil aufweist, welches in Kombination mit einem Anti-Blockiersystem eine Notbremssteuerung bewirkt, wenn der Betriebsbremsdruck ausfällt. Ein Notbremsventil sensiert dort den Druck in einer Notbremsleitung und führt einen Bremsbetätigungsdruck von einem Vorratsbehälter des Anhängefahrzeugs zu den Bremsen, falls der sensierte Druck unter einen vorbestimmten Wert fällt.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß die Fehleranfälligkeit durch den im Vergleich zum Stand der Technik wesentlich vereinfachten Aufbau erheblich reduziert ist.

Relaisventile sind durch die Entlüftung der Relaisventil-Druckkammer nicht frei von Luftverbrauch. Mit dem Entfallen einer luftmengenverstärkenden nach dem Relaisventil-Prinzip arbeitenden Ventileinrichtung nach der Erfindung entsteht der Vorteil, daß kein Luftverbrauch mehr erfolgt und die mit einem Luftverbrauch verbundene Geräuschentwicklung ebenfalls nicht stattfindet.

Durch das Entfallen eines Relaisventiles entfällt die Relaiskolben-Hysterese, was erstens zu dem Vorteil einer verbesserten Genauigkeit und zweitens zu dem Vorteil führt, daß kein verzögertes Ansprechen des ausgesteuerten Druckes gegenüber dem eingesteuerten Druck mehr vorhanden ist. Der Ansprechdruck mußte also beim St. d. T. zunächst von dem pneumatischen Bremssignal überschritten werden, damit das pneumatische Bremssignal luftmengenverstärkt durchgesteuert werden kann.

Mit dem Wegfall einer Voreilung ist der Vorteil einer verbesserten Genauigkeit verbunden; außerdem entfällt durch den Wegfall der Voreilungsfunktion das fehlerträchtige und möglicherweise sogar mißbräuchliche Einstellen der Voreilung.

Dadurch, daß die Abrißerkennung mit anderen Mitteln realisiert ist, entfällt auch der Nachteil, daß bei der Abrißerkennung nach dem Stand der Technik der Vorratsbehälter-Anschluß gegenüber dem Anschluß für die Vorratsluft um einen Rückhaltedruck reduziert ist: Bei der Ausführung der Abrißsicherung nach der erstgenannten Schrift entsteht der Rückhaltedruck durch den als Rückschlagventil gegenüber dem Vorratsbehälterdruck wirkenden Lippenring [dort (32)]; außer der Tatsache, daß ein Rückhaltedruck überhaupt entsteht, weist der Lippenring auch einen Temperaturgang auf, so daß der Rückhaltedruck auch noch temperaturabhängig ist. Hinzu kommt eine von Alterung und Fertigungstoleranzen stark abhängige Schwankung des Rückhaltedruckes bei dieser Form des Relaisventiles.

Eine Weiterbildung der Erfindung hat den Vorteil, daß durch den Wegfall des Relaisventiles mit seiner Zeitverzögerung "Ausgang-Eingang" von i. Allg. mehr als 30 ms ein Zeitvorteil für das elektrische Signal des Drucksensors verbunden ist, weil dieser Drucksensor den vom Anhängerbremsventil ausgegebenen Bremsdruck mißt.

Stark verallgemeinert ist bei der Erfindung der pneumatische Pfad optimiert, weil dieser im Gegensatz zu der im Normalfall wirksamen elektrischen Bremssignal-Übertragung nur für die Notbremsung vorgesehen ist, bei der auf eine lastabhängige Bremsdruckbeeinflussung verzichtet werden kann. Mit dem optimierten pneumatischen Pfad entsteht der Vorteil, daß zum einen luftverbrauchende Einrichtungen entfallen und zum anderen Zeitverzögerungen durch derartige Einrichtungen auch nicht mehr auftreten.

Eine andere Weiterbildung der Erfindung hat den Vorteil, daß die Umschaltung des Anhängerbremsventils in die Abrißstellung nur vom am Versorgungsanschluß des Ventils [dieser ist pneumatisch mit dem roten Kupplungskopf verbunden] anliegenden Druck abhängt. Der Übergang von einer in die andere Schaltstellung erfolgt zudem schlagartig, so daß das Schalten auch reibungsunabhängig erfolgt und schleichende Übergänge vermieden werden. Somit erfolgt beim Versorgungsleitungs-Abriß die Zwangsbremsung "sofort", und es muß gegenüber konventionellen Lösungen zunächst keine Kennlinie durchfahren werden. Das Ventil ist als druckausgeglichenes Ventil mit positiver Überdeckung ausgeführt; gegenüber konventionellen Lösungen hat diese Weiterbildung auch den Vorteil, daß atmende Räume und die damit verbundenen Vereisungsgefahren vermieden werden.

Von der letztgenannten Weiterbildung gibt es verschiedene Ausführungsformen, die entsprechend dem jeweils bevorzugten Lösungsweg bestimmte Vorteile bieten.

Die Erfindung wird im folgenden anhand eines Ausführungsbeispiels, das in den Zeichnungen dargestellt ist, näher erläutert.

Es zeigt:
- Fig. 1: Das den Funktionsumfang des Anhängerbremsventils erläuternde Blockschaltbild einer Anhänger-EBS-Bremsanlage;
- Fig. 2: das Anhängerbremsventil in der Ausführung als Schieberventil.
- Fig. 3: ein als Schieberventil mit einem integrierten Vorsteuerventil ausgebildetes Anhängerbremsventil, bei dem die Ventilbetätigung unabhängig von dem Behälterdruck erfolgt, in der Grundstellung;
- Fig. 4: das Anhängerbremsventil nach Fig. 3 in der Abrißstellung;
- Fig. 5: eine Detaildarstellung des Vorsteuerventils in der Grund- (Fig. 5a) und Abrißstellung (Fig. 5b) ;
- Fig. 6: ein Anhängerbremsventil nach dem Prinzip von Fig. 3, bei dem das Vorsteuerventil als separates 3/2-Wegeventil ausgebildet ist, in der Grundstellung;
- Fig. 7: das Anhängerbremsventil nach Fig. 6 in der Abrißstellung;
- Fig. 8: ein Anhängerbremsventil nach dem Prinzip von Fig. 6, bei dem das Vorsteuerventil als eine Kombination von zwei 2/2-Wegeventilen ausgebildet ist, in der Grundstellung;
- Fig. 9: das Anhängerbremsventil nach Fig. 8 in der Abrißstellung.

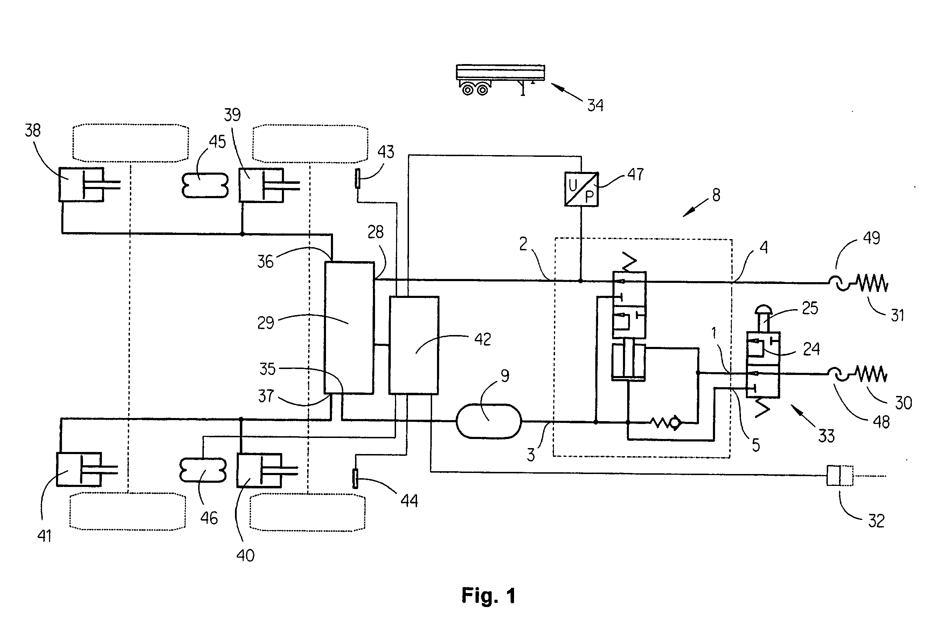

Anhand von Fig. 1 soll der Funktionsumfang des Anhängerbremsventils für eine Anhänger-EBS-Bremsanlage erläutert werden; hierbei wird anhand der Realisierung erläutert, auf welche Weise bereits eingangs erwähnte Funktionen, die entfallen können, von der Anhänger-EBS-Bremsdruckregelung übernommen werden.

Dem Blockschaltbild nach Fig. 1 ist die Konfiguration einer Basisvariante für Anhänger-EBS-Systeme zugrundegelegt, welche aus einem Sattelauflieger (34) mit zwei Achsen besteht, es handelt sich hier um ein 2S/2M-System [zwei ABS-Sensoren für zwei Räder und zwei Modulatorkanäle für die Radbremsen der linken bzw. der rechten Seite]; die ABS-Bremsdruckregelung wird also seitenweise durchgeführt

Der Anhänger mit dem erfindungsgemäßen Anhängerbremsventil ist mit dem Zugfahrzeug pneumatisch über zwei Druckschläuche, über erstens einen Vorrats-Druckschlauch (30) zur Übertragung des Versorgungsdruckes [am Zugfahrzeug befestigter roter Druckschlauch, der über den "roten Kupplungskopf" (48) des Anhängers angekuppelt ist] und über zweitens einen Brems-Druckschlauch (31) zur Übertragung des Bremsdruckes [am Zugfahrzeug befestigte gelbe Leitung, die über den "gelben Kupplungskopf" (49) des Anhängers angekuppelt ist] verbunden. Auf der Seite des Zugfahrzeuges ist sowohl der rote Druckschlauch als auch der gelbe Druckschlauch pneumatisch an ein Anhängersteuerventil [AST-Ventil] angeschlossen.

Auf der Seite des Anhängers ist der Vorrats-Druckschlauch (30) pneumatisch über ein unten erläutertes, optionales Löseventil (33) mit dem Versorgungsanschluß (1), und der Brems-Druckschlauch (31) über eine Pneumatikleitung mit dem Bremsvorgabeanschluß (4) des Anhängerbremsventiles (8) verbunden. Das Anhängerbremsventil (8) verfügt weiter über einen Behälteranschluß (3), an dem der Vorrats-Druckbehälter (9) für den Anhänger angeschlossen ist, und über einen Bremsdruckanschluß (2), an dem der pneumatische Bremsdruck an den pneumatischen Eingang (28) des pneumatischen Bremsdruckmodulators (29) ausgegeben wird; dieser Bremsdruck stellt für den Anhänger mit seiner elektronischen Bremsdruckregelung den Redundanzdruck dar.

Bei dem Anhänger mit der elektronischen Bremsdruckregelung wird in allen denkbaren Fällen, in denen eine Bremsung stattfinden soll, am Bremsdruckanschluß (2) ein entsprechender Redundanzdruck ausgesteuert. Bei normalen Bremsvorgängen gilt dies, da der Anhänger natürlich mit jeder Art von entsprechend zugelassenen Zugfahrzeugen zu koppeln sein muß, sowohl für den Fall, daß das Zugfahrzeug über eine elektronische Bremsregelung verfügt, als auch für den Fall, daß das Zugfahrzeug mit einer konventionellen pneumatischen Bremsanlage ausgerüstet ist. Bei einem Zugfahrzeug mit elektronischer Bremsregelung wird ein Bremsvorgang durch Betätigung des zum Regelsystem gehörenden Bremswertgebers eingeleitet, während dies bei einem konventionellen Zugfahrzeug durch Betätigung des entsprechenden Motorwagen-Bremsventils erfolgt.

Beim Motorwagen [dieser stellt das Zugfahrzeug dar] mit elektronischer Bremsregelung, bei dem im Normalfall natürlich der von der elektronischen Anhänger-Bremsregelung eingestellte Bremsdruck durch das vom Motorwagen über die elektrische Schnittstelle (32) [ISO 7638/CAN] zum Anhänger übertragene elektrische BremsanforderungsSignal bestimmt ist, wird der Redundanzdruck im Anhänger im Fehlerfall zum Bremsen herangezogen, wenn nämlich die Motorwagen-Elektronik ausgefallen ist. Bei Verwendung eines konventionell gebremsten Motorwagens dient der "Redundanzdruck" im Anhänger zur Bremsung des Anhängers überhaupt, da ein derartiger Motorwagen die elektronische Bremsdruckregelung im Anhänger nicht ansprechen kann. Die Umsetzung des pneumatischen Bremssignals in ein elektronisches Signal erfolgt durch den Drucksensor (47) im Anhänger.

Außer diesen normalen Bremsvorgängen wird auch vom Anhängerbremsventil (8) ein Vollbremsdruck zum Modulator (29) durchgesteuert, der eine rein pneumatische Bremsung ohne Zutun der Elektronik erlaubt. Bei Abriß einer der beiden Pneumatikleitungen zwischen Zugfahrzeug und Anhänger, oder bei nicht gekuppeltem rotem Kupplungskopf, wird in bekannter Weise durch das Zusammenwirken zwischen Anhängersteuerventil im Zugfahrzeug und Anhängerbremsventil eine Zwangsbremsung mittels des Behälterdruckes ausgelöst, indem, wie unten erläutert, in diesem Fall im Anhängerbremsventil (8) der Behälteranschluß (3) pneumatisch mit dem Bremsdruckanschluß (2) verbunden wird.

Zusammenfassend kann gesagt werden, daß in allen Fällen, in denen eine Bremsung des Anhängers erforderlich ist, sei dies eine normale Bremsung oder eine Zwangsbremsung, vom Anhängerbremsventil (8) am Bremsdruckanschluß (2) ein Druck, entweder der Redundanzdruck oder der Behälterdruck, ausgegeben wird, welcher dem pneumatischen Bremsdruckmodulator (29) zugeführt wird.

Der Bremsdruckmodulator (29) verfügt weiter über einen Druckversorgungsanschluß (35), der durch eine Pneumatikleitung mit dem Vorrats-Druckbehälter (9) verbunden ist. Der Bremsdruckmodulator (29) wird über elektrische Verbindungen durch die Elektronikeinheit (42) gesteuert.

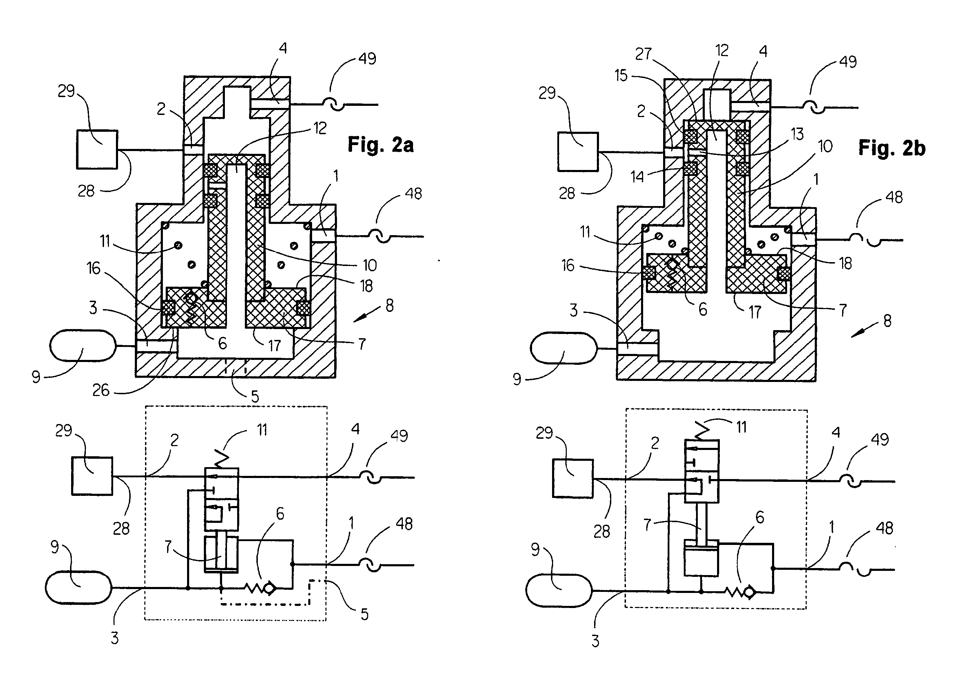

Der pneumatische Bremsdruckmodulator (29) ist z. B. als zwei-kanaliges Druckregelmodul nach der DE 42 27 084 A1 [dort Fig. 2] aufgebaut; diese Schrift wird im folgenden mit S1 bezeichnet.

Bei einer Realisierung nach der S1 ist für beide Kanäle ein gemeinsames 3/2-Magnetventil [dort (12)] als Umschaltventil für weitere kanalspezifische Belüftungs- und Entlüftungs-Magnetventile [dort (9') und (7) bzw.(9) und (8)] vorgesehen, welche für den Fall der EBS-Bremsdruckregelung mit einer taktenden Betriebsweise Pilot-Bremsdrücke je Kanal aussteuern, die wiederum an Steuereingänge [dort (5) bzw. (6)] von pro Kanal vorgesehenen Relaisventilen [dort (3) bzw. (4)] angelegt sind. Die Relaisventil-Arbeitsanschlüsse [dort (20) und (22) bzw. (21) und (23)] sind, wie in Fig. 1 gezeigt, mit den Zylinder-Bremsleitungen (36) für die in Fahrtrichtung auf der linken Fahrzeugseite angeordneten Bremszylinder (38) und (39), bzw. mit den Zylinder-Bremsleitungen (37) für die in Fahrtrichtung auf der rechten Fahrzeugseite angeordneten Bremszylinder (40) und (41) verbunden.

Der pneumatische Eingang (28) ist mit dem Steuerdruck-Anschluß [dort (13)] und der Druckversorgungsanschluß (35) ist mit dem Vorratsdruck-Anschluß [dort (17)] des Druckregelmoduls nach der S1 verbunden. In seiner federbetätigten Grundstellung, d. h. in seinem stromlosen Zustand, wird von dem 3/2-Magnetventil [dort (12)] der S1 der am pneumatischen Eingang (28) nach Fig. 1 ankommende Druck zu den Steuereingängen der Relaisventile [dort (3), (4)] der S1 durchgesteuert und luftmengenverstärkt an den genannten Relaisventil-Arbeitsanschlüssen ausgegeben. Diese Betriebsweise entspricht dem Redundanzfall, bei dem ein pneumatischer Redundanzdruck luftmengenverstärkt zu dem Bremszylinder geführt wird, ohne daß die Elektronikeinheit (42) in irgendwelcher Weise daran beteiligt ist.

Im strombeaufschlagten Zustand, d. h. gesteuert durch die Elektronikeinheit (42) nach Fig. 1, wird von dem 3/2-Magentventil [dort (12)] der S1 der am Druckversorgungsanschluß (35) nach Fig. 1 anliegende Versorgungsdruck mit den oben erläuterten kanalspezifischen Belüftungs- und Entlüftungsmagnetventilen der S1 verbunden, welches den erläuterten Fall der elektronischen EBS-Bremsdruckregelung darstellt. Im Rahmen der EBS-Bremsdruckregelung werden außerdem Druckregelfunktionen ausgeführt, die bei konventionellen Bremsanlagen z. T. als Funktion eines Anhängerbremsventiles ausgeführt sind.

Auf diese Weise wird im Rahmen der EBS-Bremsdruckregelung auch eine ladungsabhängige Bremskraftverteilung zwischen den Fahrzeugachsen vorgenommen. Hierzu ist - es wird von einem luftgefederten Auflieger mit Luftfederbälgen (45) auf der linken und (46) auf der rechten Fahrzeugseite ausgegangen - der Luftfederbalg (46) auf der rechten Seite mit einem Drucksensor versehen, dessen Druckmeßwert der Elektronikeinheit (42) zur Verfügung steht. Die Elektronikeinheit (42) modifiziert die ausgesteuerten Bremsdrücke beladungsabhängig unter Verwendung dieses die Beladung des Fahrzeugs repräsentierenden Druckmeßwertes.

Die Elektronikeinheit (42) verwendet für die EBS-Bremsdruckregelung auch den Druckmeßwert des Drucksensors (47), der den am Bremsdruckanschluß (2) ausgegebenen Bremsdruck des Anhängerbremsventiles (8) darstellt. Dieser Druckmeßwert ist für den Fall eines konventionellen Zugfahrzeuges vorgesehen, bei dem die Elektronikeinheit (42) den elektrischen Druckmeßwert als elektrisches Bremsanforderungssignal für die EBS-Bremsdruckregelung benutzt.

Der Vollständigkeit halber sei ergänzt, daß die ABS-Bremsregelung auch durch die Einrichtungen der EBS-Bremsdruckregelung durchgeführt werden kann; hierzu sind entsprechend Fig. 1 am linken Rad des Bremszylinders (39) ein ABS-Sensor (43) und am Rad des rechten Bremszylinders (40) ein ABS-Sensor (44) vorgesehen.

Faßt man alle Funktionen der EBS-Bremsdruckregelung zusammen, so müssen für das Anhängerbremsventil (8) nur noch pneumatische Funktionen realisiert sein, die durch zwei Schaltzustände definiert sind, zum einen ist dies die Ventil-Grundstellung, die vorliegt, wenn der Versorgungsanschluß mit Druck beaufschlagt ist, und zum anderen ist dies die Ventil-Abrißstellung, welche bei drucklosem Versorgungsanschluß (1) gegeben ist.

In der Ventil-Grundstellung sind durch das Anhängersteuerventil (8) folgende Verbindungen hergestellt:
G1) - Der Versorgungsanschluß (1) ist pneumatisch mit dem Behälteranschluß (3) verbunden;
G2) - der Bremsdruckanschluß (2) ist pneumatisch mit dem Bremsvorgabeanschluß (4) verbunden.

In seiner Ventil-Abrißstellung sind durch das Anhängerbremsventil (8) folgende Verbindungen hergestellt:
A1) - Der Versorgungsanschluß (1) ist pneumatisch abgeschlosssen;
A2) - der Bremsdruckanschluß (2) ist pneumatisch mit dem Behälteranschluß (3) verbunden.

In Fig. 2 ist zur Vereinfachung das optionale Löseventil (33) weggelassen, so daß der Versorgungsanschluß (1) direkt mit dem roten Kupplungskopf (48) verbunden ist.

Das Anhängerbremsventil (8) ist in Fig. 2 in beiden Schaltzuständen, in Fig. 2a in der Ventil-Grundstellung und in Fig. 2b in der Ventil-Abrißstellung gezeigt. Im jeweils unteren Bereich der Darstellungen von Fig. 2a und Fig. 2b sind die Schaltzustände des Ventils als Pneumatikschaltbilder eines kolbenbetätigten 3/2-Wegeventils dargestellt; der jeweils obere Bereich zeigt diese Schaltzustände in der Realisierung des Anhängerbremsventils (8) als Schieberventil.

Bei Fig. 2a ist zur Kennzeichnung der Ventil-Grundstellung der rote Kupplungskopf (48) in gekuppeltem Zustand gezeichnet. Im Pneumatikschaltbild befindet sich entsprechend der Ventil-Grundstellung der Kolben (7), der als Betätigungskolben für das Ventil ausgebildet ist, in seinem unbetätigten Zustand, so daß im Anhängerbremsventil (8) die vorstehend erläuterten Verbindungen G2) und G1) [im Fall, daß am Anschluß (1) der Versorgungsdruck anliegt, wird das unten erläuterte Rückschlagventil (6) in Durchlaßrichtung betrieben] hergestellt sind.

Bei Fig. 2b ist zur Deutlichmachung des Zustandes "Abriß" der rote Kupplungskopf (48) in nichtgekuppeltem Zustand gezeichnet [der gelbe Kupplungskopf (49) ist sowohl in Fig. 2a als auch in Fig. 2b in gekuppeltem Zustand gezeichnet]. Im Pneumatikschaltbild befindet sich der Betätigungskolben (7) in seinem betätigten Zustand, so daß im Anhängerbremsventil (8) die oben erläuterten Verbindungen (A1) [das Rückschlagventil (6) befindet sich bei offenem Versorgungsanschluß (1) im Sperrzustand] und (A2) hergestellt sind.

Bei der konstruktiven Ausgestaltung des Anhängerbremsventils (8) als Schieberventil entsprechend den jeweils oberen Bereichen von Fig. 2a bzw. Fig. 2b ist der mit einer O-Ring-Dichtung (16) versehene Betätigungskolben (7) mit dem Ventilschieber (10) fest und druckdicht verbunden.

In der Mitte der Betätigungskolben-Ventilschieber-Anordnung (7, 10) befindet sich ein Druckkanal (12) in Form eines Sackloches.

Der Betätigungskolben (7) weist eine erste (17) und eine zweite (18) Wirkfläche auf. Die erste Wirkfläche (17) ist durch die Querschnittsfläche des Betätigungskolbens (7) gebildet und die zweite Wirkfläche (18) ist aufgrund der baulichen Vereinigung von Betätigungskolben (7) und Ventilschieber (10) als Ringfläche ausgestaltet, wobei der innere Ringdurchmesser durch den Außendurchmesser der Ventilschieberdichtungen (14) festgelegt ist.

Die erste Wirkfläche (17) ist größer ausgebildet als die zweite Ring-Wirkfläche (18).

Das Rückschlagventil (6) ist in der gezeigten Wirkrichtung im Betätigungskolben (7) eingebaut, wobei beide Wirkflächen (18) und (17) durch dieses Rückschlagventil derart miteinander verbunden sind, daß die Durchlaßrichtung des Rückschlagventils (6) von der zweiten (18) zur ersten (17) Wirkfläche verläuft. Da die zweite Wirkfläche (18) vom am Versorgungsanschluß (1) anliegenden Druck und die erste Wirkfläche (17) von dem am Behälteranschluß (3) anliegenden Druck beaufschlagt wird, ist das Rückschlagventil (6) immer dann in Durchlaßrichtung geschaltet, wenn der am Versorgungsanschluß (1) anliegende Druck größer ist, als der am Behälteranschluß (3) anliegende Druck.

In der Grundstellung nach Fig. 2a liegt die Betätigungskolben-Ventilschieber-Anordnung (7, 10) durch die Wirkung der Rückstellfeder (11) am ersten Anschlag (26) des Ventilgehäuses auf. Bei dieser Schaltstellung sind die oben erläuterten Verbindungen G1) und G2) hergestellt. Hierbei stellen G1 und G2 jeweils direkte Verbindungen dar, d. h. in die pneumatischen Pfade sind keinerlei mechanische Zwischenglieder eingefügt [der Verbindung G2 entspricht bei der DE 28 10 850 A1, daß der am dortigen Steueranschluß (7) anliegende Druck zunächst auf den dortigen Relaiskolben (6) als mechanisches Zwischenglied einwirkt].

In seiner Abrißstellung nach Fig. 2b wirkt der am Behälteranschluß (3) anliegende Druck über die erste Wirkfläche (17) auf den Betätigungskolben (7) ein, wodurch die Ventilkolben-Ventilschieber-Anordnung (7, 10) an den zweiten Anschlag (27) geschoben wird.

Das Rückschlagventil (6) befindet sich in Sperrichtung, was die oben erläuterte Verbindung A1) bewirkt. Im Ventilschieber (10) ist ein Druckkanal (13) in Form einer Bohrung vorgesehen. Die oben erläuterte Verbindung A2) ist durch die pneumatische Verbindung vom Behälteranschluß (3) über den Sackloch-Druckkanal (12) und den Druckkanal (13) zum Bremsdruckanschluß (2) hergestellt.

Neben seiner Anordnung innerhalb des Betätigungskolbens (7) kann das Rückschlagventil (6) auch ausgeführt werden, indem der O-Ring (16) als Nutring in geeigneter Einbaurichtung ausgebildet ist, oder indem an einer anderen Stelle ein Rückschlagventil vorgesehen ist, welches die beiden Druckräume verbindet, die eine Kraft auf die Wirkfläche ausüben.

Zur Abdichtung des Ventilschiebers gegenüber dem Versorgungsanschluß (1) ist am Ventilschieber (10) eine geeignete Schieberventildichtung (14) als erste Schieber-Dichtung und zur Abdichtung gegenüber dem Bremsdruckanschluß (2) [diese Dichtung ist für den Fall der Ventil-Grundstellung wichtig] ist am Ventilschieber (10) eine Schieberventildichtung (15) als zweite Schieber-Dichtung vorgesehen.

Zur Fertigungsvereinfachung kann der Betätigungskolben (7) auch einstückig mit dem Ventilschieber (10) verbunden sein, so daß die Betätigungskolben-Ventilschieber-Einheit (7, 10) z. B. komplett als Drehteil oder als Kunststoffspritzteil herstellbar ist.

Alternativ zur gezeigten Ausführungsform, bei der die Schieberventildichtungen (14, 15) im Ventilschieber (10) und die Dichtflächen an der Innenwand des Ventilgehäuses angeordnet sind, besteht auch die Möglichkeit, wie dies aus der Ventiltechnik bekannt ist, die Schieberventildichtungen (14, 15) im Ventilgehäuse, und zwar oberhalb und unterhalb der Bohrung für den Bremsdruckanschluß (2), und die Dichtflächen am Ventilschieber (10) auszubilden.

Ausgangspunkt für das Lösen ist der Zustand des Anhängerbremsventils (8) in seiner Abrißstellung nach Fig. 2b, bei der der Bremsdruckanschluß (2) direkt mit dem Behälteranschluß (3) verbunden ist und die Bremszylinder durch Beaufschlagung mit dem im Vorratsdruck-Behälter (9) herrschenden Druck zwangsweise eingebremst sind. Solange bei dieser Zwangsbremsung im Vorratsdruck-Behälter (9) noch ein hinreichender Druck vorhanden ist, läßt sich der Anhänger nicht bewegen.

Zum Lösen der Zwangsbremsung wird am Löseventil (33) nach Fig. 1 der Lösehebel (25) betätigt; entsprechend Fig. 2a liegt die Luft aus dem Vorratsdruck-Behälter (9) über den Behälteranschluß (3) am Löseanschluß (5) an und wird dann, wie in Fig. 1 dargestellt, über den für den betätigten Zustand des Löseventils (33) wirksamen Druckkanal (24) in den Versorgungsanschluß (1) eingespeist.

Der im Vorratsdruck-Behälter herrschende Druck wirkt nun auf beide Wirkflächen (17) und (18) nach Fig. 2a ein. Die Rückstellfeder (11) ist derart dimensioniert, daß sie die Kraft durch den Flächenanteil, um welchen die zweite Wirkfläche (18) gegenüber der ersten Wirkfläche (17) reduziert ist, aufhebt und derart überkompensiert, daß die Betätigungskolben-Ventilschieber-Anordnung (7, 10) von der Rückstellfeder (11) an den ersten Anschlag (26) geschoben wird. Dadurch ist die in Fig. 2a gezeigte Ventilstellung eingenommen und der Bremsdruckanschluß (2) ist mit dem Bremsvorgabeanschluß (4) verbunden. Da jedoch zum Lösevorgang der gelbe Kupplungskopf (49) nicht angeschlossen ist, werden die am Bremsdruckanschluß (2) angeschlossenen Druckräume, d. h. die Bremszylinder entlüftet, so daß die Bremse gelöst ist.

Es sei angemerkt, daß es möglich ist, unter Verwendung der hier dargelegten Ventileigenschaften den in Schieberventilausführung ausgebildeten Ventilbereich [(2), (10), (13), (14), (15)] des Anhängerbremsventils (8) auch in Sitzventilausführung auszubilden.

Ergänzend sei darauf hingewiesen, daß das erfindungsgemäße Anhängerbremsventil (8) unter Umständen auch auf einem Anhänger ohne elektronische Bremswertregelung einsetzbar ist; es sind dies konventionell gebremste Anhänger, deren gutes Zeitverhalten es erlaubt, auf eine Luftmengenverstärkung im Anhängerbremsventil zu verzichten.

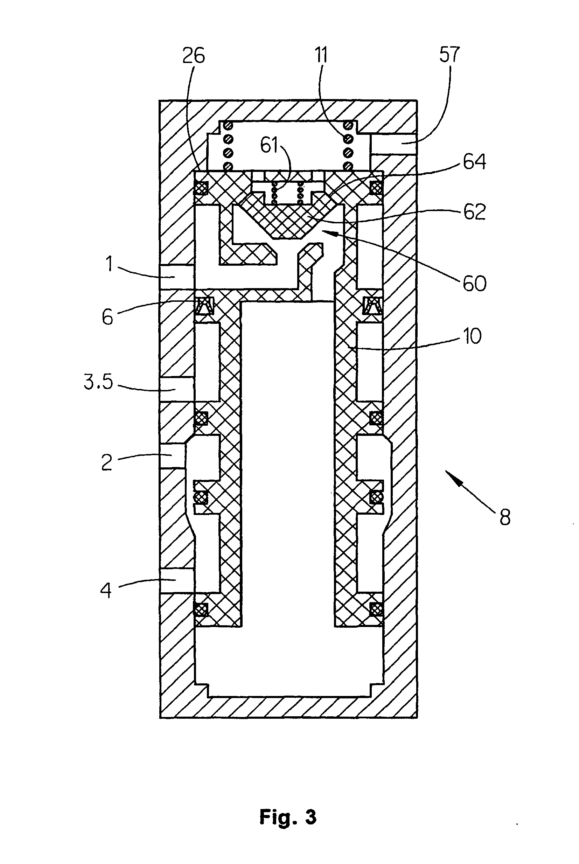

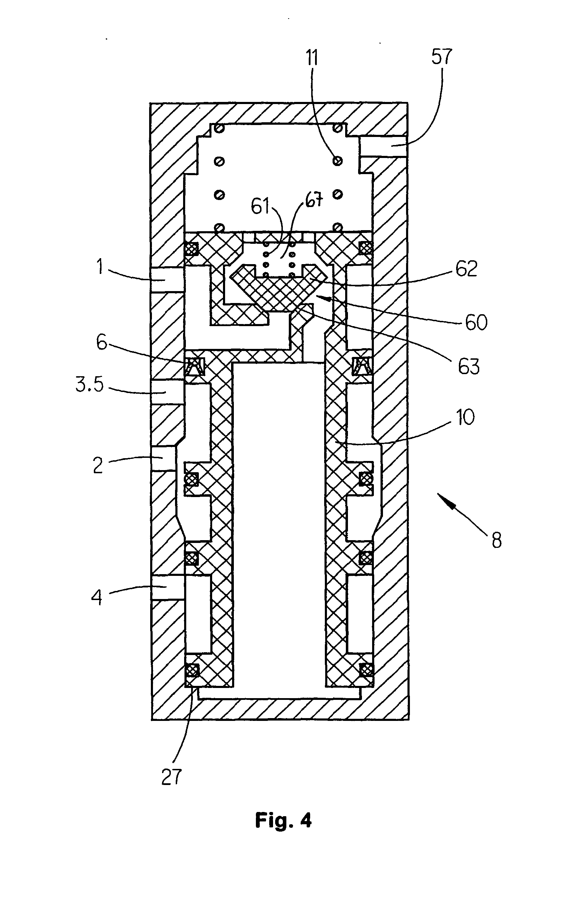

In den Darstellungen nach Fig. 3 und Fig. 4 ist das erfindungsgemäße Anhängerbremsventil in einer Ausführungsform als Schieberventil gezeigt, bei der die Schieberbetätigung ausschließlich vom am Versorgungsanschluß (1) anliegenden Druck abhängt, d. h. bei welcher der am Behälteranschluß (3) anliegende Druck keine Kraft auf den Ventilschieber (10) ausübt. Hierzu ist das Anhängerbremsventil (8) als druckentlastetes Ventil aufgebaut, bei dem auf den Ventilschieber (10) von keinem anderen Anschluß, außer dem Versorgungsanschluß (1), welcher über eine unten erläuterte Wirkfläche krafterzeugend auf diesen einwirkt, eine Druckkraft erzeugt wird.

Da die in Fig. 2a und Fig. 2b mit den Anschlüssen des Anhängerbremsventils (8) verbundenen, in Fig. 1 ausführlich dargestellten und in Fig. 2a, Fig. 2b in vereinfachter Form gezeigten, Komponenten oben ausführlich erläutert sind, beschränkt sich die Darstellung in Fig. 3 und Fig. 4 auf die Erklärung der Ventil-Funktionsweise unter Bezug auf die Ventilanschlüsse. Der Klarheit wegen sei ergänzt, daß sich das Anhängerbremsventil (8) nach Fig. 3 und Fig. 4 in identischer Weise wie das Anhängerbremventil nach Fig. 2a und Fig. 2b in einer Anhänger-EBS-Bremsanlage nach Fig. 1 betreiben läßt.

Der Übersichtlichkeit halber sind in Fig. 3 und Fig. 4 Pneumatikschaltbilder, wie sie in den unteren Teilen von Fig. 2a und Fig. 2b gezeigt sind, weggelassen, da die zu Fig. 3 und Fig. 4 gehörenden Pneumatikschaltbilder hierzu grundsätzlich gleichartig sind; es besteht lediglich der Unterschied, daß, wie erläutert, der Ventilschieber-Kolben (10) nach Fig. 3 und Fig. 4 nicht von der Druckdifferenz zwischen dem Versorgungsanschluß (1) und dem Behälteranschluß (3) betätigt, sondern ausschließlich durch den Druck am Versorgungsanschluß (1) geschaltet wird.

In Fig. 3 und Fig. 4 sind also der Versorgungsanschluß (1), der Bremsvorgabeanschluß (4), der Behälteranschluß (3) und der Bremsdruckanschluß (2) gezeigt, wobei der Löseanschluß (5) pneumatisch mit dem Behälteranschluß (3) verbunden ist. Zusätzlich ist eine Entlüftung (57) zur Atmosphäre vorgesehen. Der Ventilschieber (10) ist wie erwähnt als Ventilschieber-Kolben ausgebildet, d. h. er vereinigt die Funktionen des vorstehend erläuterten Ventilschiebers (10) und des Betätigungskolbens (7).

Der Ventilschieber (10) ist mit der Rückstellfeder (11) belastet und weist zwei Stellungen auf; eine in Fig. 3 dargestellte Grundstellung, bei der der Ventilschieber (10) am ersten Anschlag (26) anliegt, und eine in Fig. 4 gezeigte Abrißstellung, bei der der Ventilschieber (10) am zweiten Anschlag (27) zur Anlage kommt.

Durch eine auf den Ventilschieber (10) über die erwähnte Wirkfläche einwirkende Druckkraft ist bei druckbeaufschlagtem Versorgungsanschluß [Fig. 3] die Grundstellung eingenommen, während die Abrißstellung [Fig. 4] durch die Wirkung der Rückstellfeder (11) eingenommen ist, wenn der Versorgungsanschluß (1) drucklos ist.

Das vorstehend erläuterte Rückschlagventil (6) ist in Fig. 3, Fig. 4 als Nutring realisiert. Durch diese Rückschlagfunktion und die in der Ventil-Grundstellung nach Fig. 3 gezeichnete Stellung des Ventilschiebers (10) sind die vorstehend erläuterten Verbindungen (G1) [pneumatische Verbindung Versorgungsanschluß (1) mit Behälteranschluß (3)] und (G2) [pneumatische Verbindung Bremsdruckanschluß (2) mit Bremsvorgabeanschluß (4)] realisiert. In der Ventil-Abrißstellung nach Fig. 4 sind bei der gezeigten Stellung des Ventilschiebers (10) die vorstehend erläuterten Verbindungen (A1) [pneumatischer Abschluß Versorgungsanschluß (1)] und (A2) [pneumatische Verbindung Bremsdruckanschluß (2) mit Behälteranschluß (3)] realisiert.

Im Ventilschieber (10) ist ein Vorsteuerventil (60) integriert, welches aus einem Ventilschaltglied (62), einer auf das Ventilschaltglied (62) einwirkenden Feder (61), einem ersten Ventilsitz (63) und einem zweiten Ventilsitz (64) besteht.

Entsprechend seinen beiden Ventilsitzen weist das Vorsteuerventil (60) zwei Stellungen, eine Ausgangsstellung und eine Schaltstellung, auf. Die Ausgangsstellung des Vorsteuerventils (60) ist in Fig. 4 gezeigt: In der Abrißstellung liegt kein Druck am Versorgungsanschluß (1) an, und durch die Wirkung der Feder (61) liegt das Ventilschaltglied (62) am ersten Ventilsitz (63) an, wodurch der Druckraum (67) gegenüber dem Versorgungsanschluß (1) abgedichtet ist. Wird an einem abgestellten Anhänger [Abriß-Stellung nach Fig. 4] der Vorrats-Druckschlauch (30) angeschlossen, so steigt der Druck am Versorgungsanschluß (1) an, und entsprechend des jeweils anliegenden Drucks und des wirksamen Durchmessers (65) am ersten Ventilsitzes (63) wird eine Druckkraft auf das Ventilschaltglied (62) ausgeübt. Dieser wirksame Durchmesser (65) bestimmt mit den Eigenschaften der Feder (61) [Federlänge und Federkonstante] eine Druckschwelle, bei deren Überschreitung das Ventilschaltglied (62) vom ersten Ventilsitz (63) abhebt.

Das Ventilschaltglied (62) ist in seiner Kegelform derart ausgelegt, daß nach dem Abheben vom ersten Ventilsitz (63) der Druck am Versorgungsanschluß (1) nun auf eine größere Fläche einwirkt, wodurch das Vorsteuerventil (60) umschaltet, indem die Druckkraft die Kraft der Feder (61) überwindet, und, entsprechend der in Fig. 3 gezeigten Schaltstellung des Vorsteuerventils (60), das Ventilschaltglied (62) gegen den zweiten Ventilsitzes (64) presst, und diesen schließt.

Mit dem Übergang in die Schaltstellung des Vorsteuerventils (60) wird die auf den Ventilschieber (10) einwirkende Druckkraft schlagartig erhöht, und der Ventilschieber wird, ausgehend von seiner Stellung in Fig. 4, bei der er am zweiten Anschlag (27) anliegt, gegen die Kraft der Rückstellfeder (11) an den ersten Anschlag (26) geschoben; dadurch hat das Anhängerbremsventil (8) seine Grundstellung eingenommen.

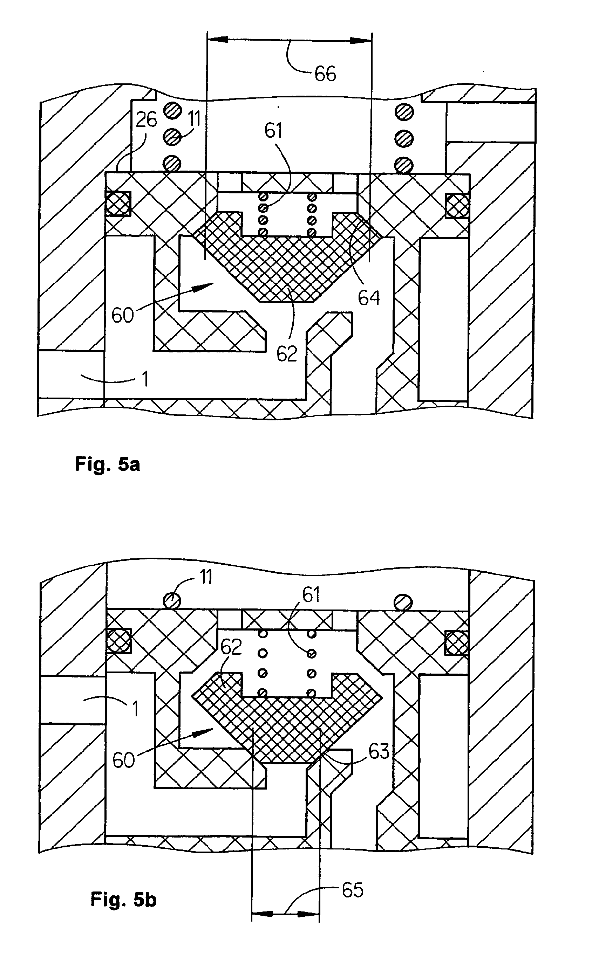

Im Vergleich zum wirksamen Durchmesser (65) in der Ausgangsstellung des Vorsteuerventils (60) nach Fig. 5b ist in der Schaltstellung des Vorsteuerventils (60) nach Fig. 5a der wirksame Durchmesser (66) erhöht; hierdurch wird eine Schalthysterese eingeführt.

Durch die Schalthysterese wird bewirkt, daß das Anhängerbremsventil nicht bei z. B. einer kurzzeitigen Unterschreitung der erläuterten Druckschwelle wieder in die Abrißstellung nach Fig. 4 übergeht. Um von der Schaltstellung [Fig. 3] zur Abrißstellung [Fig. 4] überzugehen, muß der Druck am Versorgungsanschluß (1) nämlich derart abgesunken sein, daß das Ventilschaltglied (62) durch die Kraft der Feder (61) wieder auf den ersten Ventilsitz (63) gedrückt wird. Erst dann wird der Ventilschieber (10) durch die Kraft der Rückstellfeder (11) wieder an den der Abrißstellung entsprechenden zweiten Anschlag (27) zurückgeschoben.

Geht man von einem üblichen Solldruck im Vorrats-Druckschlauch von 8 bar aus, so wird die Druckschwelle z. B. zweckmäßigerweise auf 3,5 bar gelegt. Die erläuterte Schalthysterese kann z. B. so ausgelegt werden, daß die Abrißstellung des Anhängerbremsventils bei Unterschreiten eines Druckes von 2,5 bar wieder eingenommen wird.

Der erste Ventilsitz (63) wirkt als Belüftungsitz und der zweite Ventilsitz (64) als Entlüftungssitz; bei der Entlüftung des Anhängerbremsventils (8), d. h. beim Übergang des Ventilschiebers (10) bei geöffnetem zweiten Ventilsitz (64) [Fig. 4] vom ersten Anschlag (26) zum zweiten Anschlag (27), besteht der Vorteil, daß die Entlüftung direkt zur Atmosphäre erfolgt und keine atmenden Räume vorliegen, wie dies bei konventionellen Anhängerbremsventilen der Fall ist. Atmende Räume haben den Nachteil, daß Feuchtigkeit in das Gerät eindringen kann, was unter Umständen zu Vereisungen führt. Gegenüber konventionellen Anhängerbremsventilen besteht auch der Vorteil, daß die Ventilumschaltung sofort wirksam ist und nicht zuerst eine Kennlinie durchfahren werden muß.

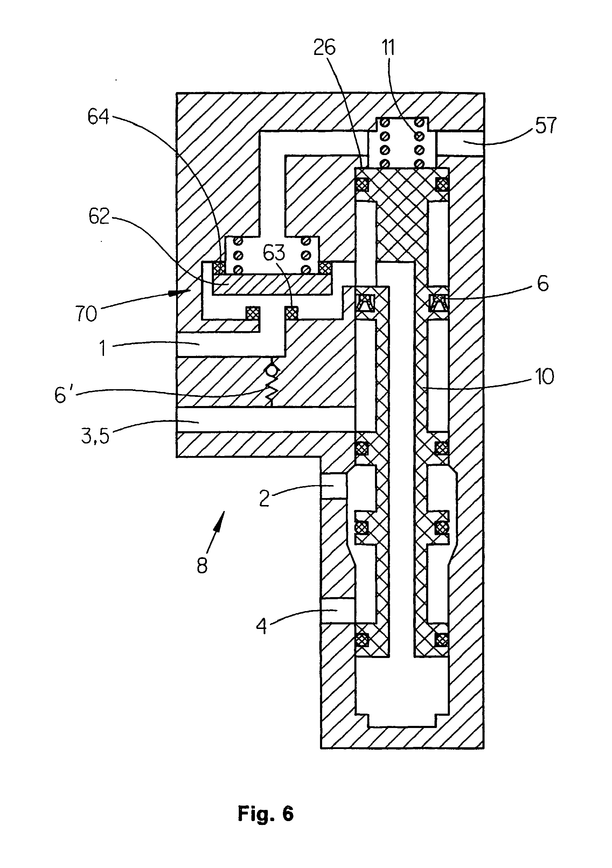

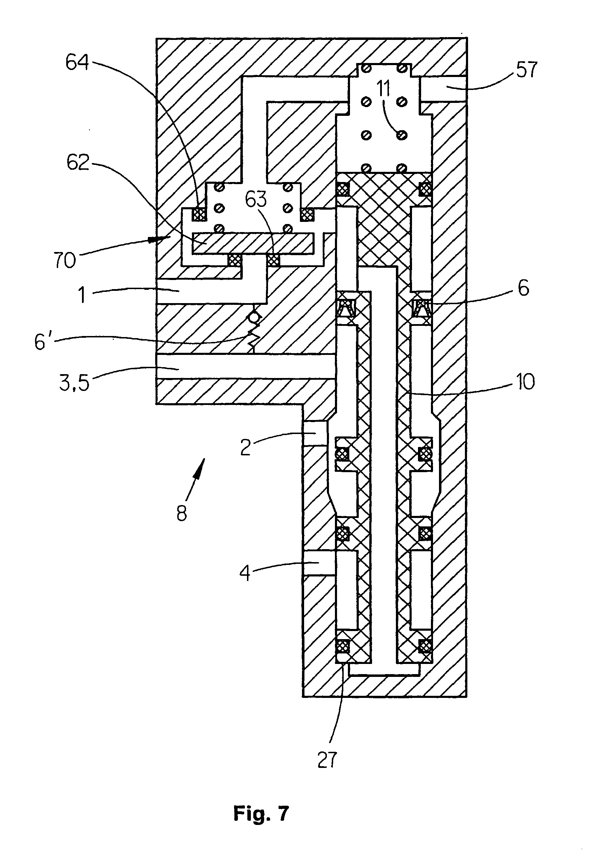

In den Ausführungsformen nach Fig. 6 und Fig. 7 [das Rückschlagventil (6') sei zunächst nicht implementiert] ist das Vorsteuerventil (60) nicht mehr im Ventilschieber (10) integriert, sondern als separates 3/2-Wegeventil (70) ausgeführt. Das Ventilschaltglied (62) ist als übliches Sitzventil-Schaltelement ausgebildet, das in der Abrißstellung [Fig. 7] am ersten Ventilsitz (63) und in der Grundstellung [Fig. 6] an dem zweiten Ventilsitz (64) anliegt. Die Funktion ist gleichartig zu den Ausführungsformen nach Fig. 3 und Fig. 4 mit der einen Ausnahme, daß nach dem Anschluß des Vorrats-Druckschlauches (30) die Belüftung des Vorratsdruck-Behälters (9) über den Behälteranschluß (3), welche über das als Nutring ausgebildetes Rückschlagventil (6) erfolgt, erst stattfindet, wenn das 3/2-Wegeventil (70) von seiner Ausgangsstellung [Fig. 7] in seine Schaltstellung [Fig. 6] übergegangen ist, da der Druck des Versorgungsanschlußes (1) dann am Nutring-Rückschlagventil (6) ebenfalls anliegt.

Eine zu Fig. 6, 7 geänderte Ausführungsform liegt vor, wenn das Rückschlagventil (6) nicht als Nutring im Ventilschieber (10) realisiert, sondern als separates, im Gehäuse angeordnetes Rückschlagventil (6') ausgeführt ist. Der Nutring (6) ist dann durch einen entsprechenden O-Ring ersetzt. Hier entfällt die im Zusammenhang mit Fig. 6, 7 erläuterte Einschränkung, daß die Belüftung des Vorratsdruck-Behälters (9) erst nach dem Übergang des 3/2-Wegeventil (70) in seine Schaltstellung erfolgt.

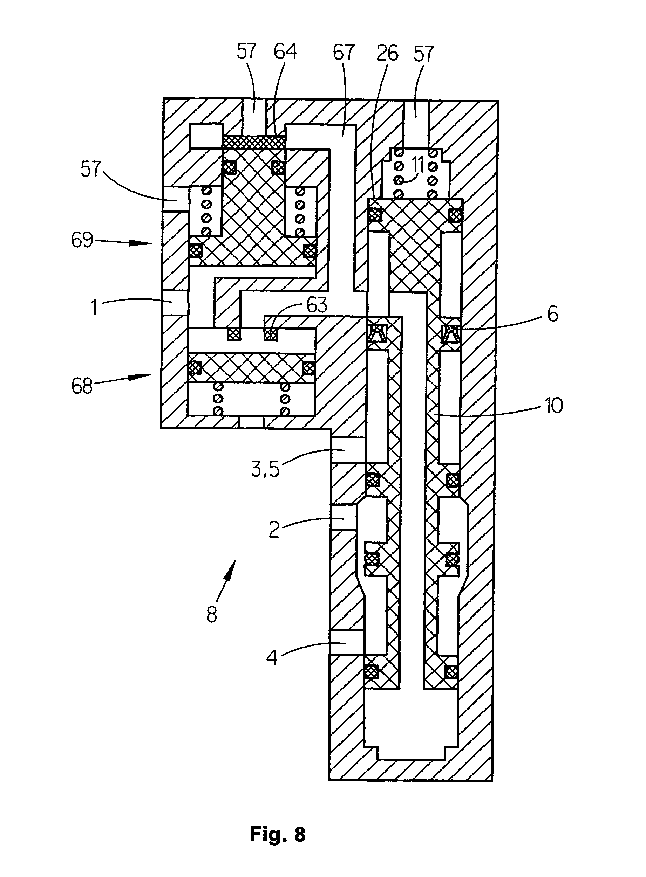

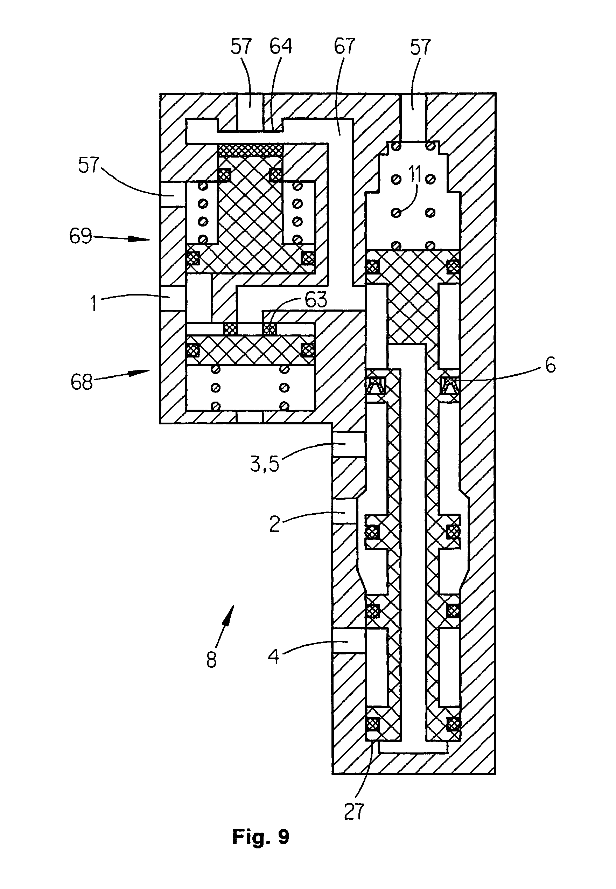

Die Darstellungen nach Fig. 8 und Fig. 9 zeigen die Ausführungsform nach Fig. 6, Fig. 7, bei denen statt eines 3/2-Wegeventils (70) zwei 2/2-Wegeventile, ein erstes 2/2-Wegeventil (68) als Belüftungsventil und ein zweites 2/2-Wegeventil (69) als Entlüftungsventil vorgesehen sind. In der Grundstellung nach Fig. 8 ist das erste 2/2-Wegeventil (68) geöffnet, das entsprechende Ventilschaltglied ist vom ersten Ventilsitz (63) abgehoben, so daß eine Belüftung durch den Versorgungsanschluß (1) erfolgt; dagegen ist das zweite 2/2-Wegeventil (69) geschlossen, der zweite Ventilsitz (64) ist geschlossen, so daß entsprechend der oben erläuterten Grundstellungs-Funktion der Ventilschieber (10) per Duckkraft an den ersten Anschlag (26) geschoben ist.

In der Abrißstellung nach Fig. 9 ist dagegen das zweite 2/2-Wegeventil (69) geöffnet; der geöffnete zweite Ventilsitz (64) ermöglicht eine Entlüftung des auf den Ventilschieber (10) wirkenden Druckraumes (67), so daß über die Rückstellfeder (11) die Abrißstellung am zweiten Anschlag (27) eingenommen ist. In dieser Stellung ist das erste 2/2-Wegeventil (68) [erster Ventilsitz (63)] geschlossen, so daß der Druckraum (67), wie oben erläutert, vom Versorgungsanschluß (1) abgetrennt ist.

## Patentansprüche

1. Ventileinrichtung (8) für einen an ein Zugfahrzeug angekuppelten Anhänger mit folgenden Merkmalen:
a) Es ist ein Versorgungsanschluß (1) zur Verbindung mit einem den Vorratsdruck zwischen dem Zugfahrzeug und dem Anhänger übertragenden Druckschlauch (30) vorgesehen;
b) es ist ein Bremsvorgabeanschluß (4) zur Verbindung mit einem den Bremsdruck vom Zugfahrzeug zum Anhänger übertragenden Druckschlauch (31) vorgesehen;
c) es ist ein Behälteranschluß(3) zur Verbindung mit einem Vorrats-Druckbehälter (9) des Anhängers vorgesehen;
d) es ist ein Bremsdruckanschluß(2) zur Ausgabe des Bremsdruckes vorgesehen;
e) bei druckbeaufschlagtem Versorgungsanschluß (1) ist der am Bremsdruckanschluß (2) anliegende Druck vom am Bremsvorgabeanschluß (4) anliegenden Druck abhängig;
f) bei drucklosem Versorgungsanschluß (1) ist der Bremsdruckanschluß (2) pneumatisch mit dem Behälteranschluß (3) verbunden;
g) bei druckbeaufschlagtem Versorgungsanschluß (1) ist der Bremsdruckanschluß (2) pneumatisch direkt mit dem Bremsvorgabeanschluß (4) verbunden;
gekenntzeichnet durch das folgende Merkmal:
h) die Ventileinrichtung (8) ist als Schieberventil ausgestaltet.

2. Ventileinrichtung nach Anspruch 1, **gekennzeichnet durch** die folgenden Merkmale:
a) Es ist ein Ventilschieber(10) mit einer ersten und einer zweiten Schieber-Dichtung (14, 15) vorgesehen;
b) zur Betätigung des Ventilschiebers (10) ist ein Kolben (7) mit einer ersten und mit einer zweiten Wirkfläche (17, 18) vorgesehen.

3. Ventileinrichtung nach Anspruch 2, **dadurch gekennzeichnet, daß** die erste Wirkfläche(17) größer als die zweite Wirkfläche(18) ausgebildet ist.

4. Ventileinrichtung nach Anspruch 3, **dadurch gekennzeichnet, daß** eine die Wirkflächenunterschiede überkompensierende Rückstellfeder (11) vorgesehen ist.

5. Ventileinrichtung nach einem der Ansprüche 2 bis 4, **gekennzeichnet durch** die folgenden Merkmale:
a) Der Kolben(7) ist als Betätigungskolben ausgebildet;
b) der Betätigungskolben (7) und der Ventilschieber (10) sind baulich vereinigt.

6. Ventileinrichtung nach mindestens einem der Ansprüche 2 bis 5, **gekennzeichnet durch** die folgenden Merkmale:
a) Die erste Wirkfläche(17) ist **durch** die Querschnittsfläche des Betätigungskolbens (7) gebildet;
b) die zweite Wirkfläche(18) ist **durch** eine sich aus der baulichen Vereinigung von Betätigungskolben (7) und Ventilschieber (10) ergebenden Ringfläche gebildet;

7. Ventileinrichtung nach Anspruch 6, **dadurch gekennzeichnet, daß** die Druckräume für beide Wirkflächen (17, 18) durch ein Rückschlagventil (6) verbunden sind.

8. Ventileinrichtung nach Anspruch 7, **dadurch gekennzeichnet, daß** für das Rückschlagventil (6) eine von der zweiten (18) zur ersten (17) Wirkfläche verlaufende Durchlaßrichtung vorgesehen ist.

9. Ventileinrichtung nach einem der Ansprüche 2 bis 8, **dadurch gekennzeichnet, daß** die Druckleitung zum Bremsdruckanschluß (2) zentral durch die Einheit Betätigungskolben/Ventitschieber (7, 10) geführt ist.

10. Ventileinrichtung nach Anspruch 9, **gekennzeichnet durch** die folgenden Merkmale:
a) Die erste Wirkfläche (17) ist pneumatisch mit dem Behälteranschluß (3) verbunden;
b) die zweite Wirkfläche (18) ist pneumatisch mit dem Versorgungsanschluß (1) verbunden.

11. Ventileinrichtung nach einem der vorstehenden Ansprüche, **gekennzeichnet durch** die folgenden Merkmale:
a) Es ist ein Löseanschluß (5) vorgesehen;
b) der Löseanschluß (5) ist pneumatisch mit dem Druckraum der ersten Wirkfläche (17) verbunden.

12. Ventileinrichtung nach Anspruch 1, **gekennzeichnet durch** die folgenden Merkmale:
a) Die Ventileinrichtung (8) weist einen mit einer Rückstellfeder (11) belasteten Ventilschieber (10) mit zwei Stellungen, einer Grundstellung und einer Abrißstellung, auf;
b) die Grundstellung ist bei druckbeaufschlagtem Versorgungsanschluß (1) **durch** eine auf den Ventilschieber (10) über eine Wirkfläche (18) einwirkende Druckkraft eingenommen;
c) die Abrißstellung ist bei drucklosem Versorgungsanschluß (1) **durch** die Wirkung der Rückstellfeder (11) eingenommen.

13. Ventileinrichtung nach Anspruch 12, **gekennzeichnet durch** die folgenden Merkmale:
a) Es ist ein mit dem Druck des Versorgungsanschlusses (1) beaufschlagtes Vorsteuerventil (60) mit zwei Stellungen, einer Ausgangsstellung und einer Schaltstellung, vorgesehen;
b) die auf den Ventilschieber (10) einwirkende Druckkraft ist von der Stellung des Vorsteuerventils (60) abhängig.

14. Ventileinrichtung nach Anspruch 13, **gekennzeichnet durch** die folgenden Merkmale:
a) Bei Unterschreiten einer festlegbaren Druckschwelle **durch** den am Versorgungsanschluß (1) anliegenden Druck ist am Vorsteuerventil (60) **durch** die Wirkung einer Feder (61) die Ausgangsstellung eingenommen;
b) bei Erreichen oder Überschreiten der festlegbaren Druckschwelle **durch** den am Versorgungsanschluß (1) anliegenden Druck ist am Vorsteuerventil (60) die Schaltstellung eingenommen.

15. Ventileinrichtung nach Anspruch 14, **dadurch gekennzeichnet, daß** in der Schaltstellung des Vorsteuerventils (60) die auf den Ventilschieber(10) einwirkende Druckkraft vergrößert ist.

16. Ventileinrichtung nach Anspruch 15, **dadurch gekennzeichnet, daß** die Vergrößerung der auf den Ventilschieber (10) einwirkenden Druckkraft durch eine Druckerhöhung realisiert ist.

17. Ventileinrichtung nach Anspruch 15, **dadurch gekennzeichnet, daß** das Vorsteuerventil (60) im Ventilschieber (10) integriert ist.

18. Ventileinrichtung nach Anspruch 17, **gekennzeichnet durch** die folgenden Merkmale:
a) In der Ausgangsstellung des Vorsteuerventils (60) ist **durch** die Wirkung der Feder (61) eine dichtende Verbindung eines Ventilschaltgliedes (62) mit einem ersten Ventilsitz (63) hergestellt;
b) in der Schaltstellung des Vorsteuerventils (60) ist eine dichtende Verbindung des Ventilschaltgliedes (62) mit einem zweiten Ventilsitz (64) hergestellt.

19. Ventileinrichtung nach Anspruch 18, **dadurch gekennzeichnet, daß** die Höhe der festlegbaren Druckschwelle zur Einnahme der Schaltstellung des Vorsteuerventils (60) durch die Eigenschaften der auf das Ventilschaltglied (62) einwirkenden Feder (61) und durch den wirksamen Durchmesser des ersten Ventilsitzes (63) bestimmt sind.

20. Ventileinrichtung nach Anspruch 19, **dadurch gekennzeichnet, daß** das zur Bildung einer Schalthysterese für die festlegbare Druckschwelle der wirksame Durchmesser des zweiten Ventilsitzes (64) größer als der wirksame Durchmesser des ersten Ventilsitzes (63) gewählt ist.

21. Ventileinrichtung nach Anspruch 16, **dadurch gekennzeichnet, daß** das Vorsteuerventil (60) in einem separat zum Gehäuseteil des Ventilschiebers (10) angebrachten Gehäuseteil angeordnet ist.

22. Ventileinrichtung nach Anspruch 21, **dadurch gekennzeichnet, daß** das Vorsteuerventil (60) als 3/2-Wege-Ventil (70) realisiert ist.

23. Ventileinrichtung nach Anspruch 22, **dadurch gekennzeichnet, daß** das Vorsteuerventil als eine Kombination von zwei 2/2-Wege-Ventilen (68, 69) realisiert ist.

## Claims

1. Valve device (8) for a trailer coupled to a towing vehicle, having the following features:
a) a supply connection (1) is provided for connecting to a pressure hose (30) that transfers the supply pressure between the towing vehicle and the trailer;
b) a braking instruction connection (4) is provided for connecting to a pressure hose (31) that transfers the brake pressure from the towing vehicle to the trailer;
c) a reservoir connection (3) is provided for connecting to a supply pressure reservoir (9) of the trailer;
d) a brake pressure connection (2) is provided for delivering the brake pressure;
e) when the supply connection (1) is acted upon by pressure, the pressure present at the brake pressure connection (2) is dependent upon the pressure present at the braking instruction connection (4);
f) when the supply connection (1) is without pressure, the brake pressure connection (2) is connected pneumatically to the reservoir connection (3);
g) when the supply connection (1) is acted upon by pressure, the brake pressure connection (2) is connected pneumatically directly to the braking instruction connection (4);
**characterized by** the following feature:
h) the valve device (8) is in the form of a slide valve.

2. Valve device according to claim 1, **characterized by** the following features:
a) a valve slider (10) having first and second slider seals (14, 15) is provided;
b) for actuating the valve slider (10) there is provided a piston (7) having first and second effective areas (17, 18).

3. Valve device according to claim 2, **characterized in that** the first effective area (17) is larger than the second effective area (18).

4. Valve device according to claim 3, **characterized in that** a restoring spring (11) that overcompensates for the differences in the effective areas is provided.

5. Valve device according to any one of claims 2 to 4, **characterized by** the following features:
a) the piston (7) is in the form of an actuating piston;
b) the actuating piston (7) and the valve slider (10) are structurally united.

6. Valve device according to at least one of claims 2 to 5, **characterized by** the following features:
a) the first effective area (17) is formed by the cross-sectional area of the actuating piston (7);
b) the second effective area (18) is formed by an annular area resulting from the structural uniting of actuating piston (7) and valve slider (10).

7. Valve device according to claim 6, **characterized in that** the pressure chambers for the two effective areas (17, 18) are connected by a non-return valve (6).

8. Valve device according to claim 7, **characterized in that** the non-return valve (6) has a pass direction from the second effective area (18) to the first effective area (17).

9. Valve device according to any one of claims 2 to 8, **characterized in that** the pressure line passes to the brake pressure connection (2) centrally through the unit actuating piston/valve slider (7, 10).

10. Valve device according to claim 9, **characterized by** the following features:
a) the first effective area (17) is connected pneumatically to the reservoir connection (3);
b) the second effective area (18) is connected pneumatically to the supply connection (1).

11. Valve device according to any one of the preceding claims, **characterized by** the following features:
a) a release connection (5) is provided;
b) the release connection (5) is connected pneumatically to the pressure chamber of the first effective area (17).

12. Valve device according to claim 1, **characterized by** the following features:
a) the valve device (8) has a valve slider (10) biased by a restoring spring (11), the valve slider having two positions, a normal position and a breakaway position;
b) the normal position is assumed, when the supply connection (1) is acted upon by pressure, as a result of a pressing force acting on the valve slider (10) by way of an effective area (18);
c) the breakaway position is assumed, when the supply connection (1) is without pressure, as a result of the action of the restoring spring (11).

13. Valve device according to claim 12, **characterized by** the following features:
a) a pilot valve (60) acted upon by the pressure of the supply connection (1) is provided, the pilot valve having two positions, an initial position and a switched position;
b) the pressing force acting on the valve slider (10) is dependent upon the position of the pilot valve (60).

14. Valve device according to claim 13, **characterized by** the following features:
a) when the pressure present at the supply connection (1) lies below a predeterminable pressure threshold, the initial position is assumed at the pilot valve (60) as a result of the action of a spring (61);
b) when the pressure present at the supply connection (1) reaches or exceeds the predeterminable pressure threshold, the switched position is assumed at the pilot valve (60).

15. Valve device according to claim 14, **characterized in that** in the switched position of the pilot valve (60), the pressing force acting on the valve slider (10) is increased.

16. Valve device according to claim 15, **characterized in that** the increase in the pressing force acting on the valve slider (10) is realized by a rise in pressure.

17. Valve device according to claim 15, **characterized in that** the pilot valve (60) is integrated in the valve slider (10).

18. Valve device according to claim 17, **characterized by** the following features:
a) in the initial position of the pilot valve (60), the action of the spring (61) brings about a sealed connection between a valve switching member (62) and a first valve seat (63);
b) in the switched position of the pilot valve (60), a sealed connection is made between the valve switching member (62) and a second valve seat (64).

19. Valve device according to claim 18, **characterized in that** the level of the predeterminable pressure threshold for assuming the switched position of the pilot valve (60) is determined by the properties of the spring (61) acting on the valve switching member (62) and by the effective diameter of the first valve seat (63).

20. Valve device according to claim 19, **characterized in that** to provide switching hysteresis for the predeterminable pressure threshold, the effective diameter of the second valve seat (64) is selected to be greater than the effective diameter of the first valve seat (63).

21. Valve device according to claim 16, **characterized in that** the pilot valve (60) is arranged in a housing part mounted separately from the housing part of the valve slider (10).

22. Valve device according to claim 21, **characterized in that** the pilot valve (60) is realized as a 3/2 directional control valve (70).

23. Valve device according to claim 22, **characterized in that** the pilot valve is realized as a combination of two 2/2 directional control valves (68, 69).

## Revendications

1. Agencement de valve (8) pour une remorque attelée à un véhicule tracteur, présentant les éléments suivants :
a) il est prévu un raccord d'alimentation (1) pour la liaison avec un tuyau sous pression (30) transmettant la pression de réserve entre le véhicule tracteur et la remorque ;
b) il est prévu un raccord de consigne de freinage (4) pour la liaison avec un tuyau sous pression (31) transmettant la pression de freinage depuis le véhicule tracteur vers la remorque ;
c) il est prévu un raccord de récipient (3) pour la liaison avec un récipient de réserve sous pression (9) de la remorque ;
d) il est prévu un raccord de pression de freinage (2) pour émettre la pression de freinage ;
e) lorsque le raccord d'alimentation (1) est sollicité en pression, la pression appliquée au raccord de pression de freinage (2) dépend de la pression appliquée au raccord de consigne de freinage (4) ;
f) lorsque le raccord d'alimentation (1) est sans pression, le raccord de pression de freinage (2) est relié sur le plan pneumatique au raccord de récipient (3) ;
g) lorsque le raccord d'alimentation (1) est sollicité en pression, le raccord de pression de freinage (2) est relié sur le plan pneumatique directement au raccord de consigne de freinage (4) ;
**caractérisé par** l'élément suivant :
h) l'agencement de valve (8) est réalisé sous la forme d'une valve à tiroir.

2. Agencement de valve selon la revendication 1, **caractérisé par** les éléments suivants :
a) il est prévu un tiroir de valve (10) pourvu d'un premier et d'un second joint de tiroir (14, 15) ;
b) pour actionner le tiroir de valve (10), il est prévu un piston (7) pourvu d'une première et d'une seconde surface d'action (17, 18).

3. Agencement de valve selon la revendication 2, **caractérisé en ce que** la première surface d'action (17) est réalisée plus grande que la seconde surface d'action (18).

4. Agencement de valve selon la revendication 3, **caractérisé en ce qu'**il est prévu un ressort de rappel (11) qui surcompense les différences des surfaces d'action.

5. Agencement de valve selon l'une des revendications 2 à 4, **caractérisé par** les éléments suivants :
a) le piston (7) est réalisé sous forme de piston d'actionnement ;
b) le piston d'actionnement (7) et le tiroir de valve (10) sont réunis structurellement.

6. Agencement de valve selon l'une des revendications 2 à 5, **caractérisé par** les éléments suivants :
a) la première surface d'action (17) est formée par la surface en section transversale du piston d'actionnement (7) ;
b) la seconde surface d'action (18) est formée par une surface annulaire résultant de la réunion structurelle du piston d'actionnement (7) et du tiroir de valve (10).

7. Agencement de valve selon la revendication 6, **caractérisé en ce que** les chambres de pression pour les deux surfaces d'action (17, 18) sont reliées par un clapet anti-retour (6).

8. Agencement de valve selon la revendication 7, **caractérisé en ce qu'**il est prévu une direction de passage allant de la seconde surface d'action (18) vers la première (17), pour le clapet anti-retour.

9. Agencement de valve selon l'une des revendications 2 à 8, **caractérisé en ce que** la conduite sous pression vers le raccord de pression de freinage (2) est menée au centre à travers l'unité piston d'actionnement/tiroir de valve (7, 10).

10. Agencement de valve selon la revendication 9, **caractérisé par** les éléments suivants :
a) la première surface d'action (17) est reliée par voie pneumatique au raccord de récipient (3) ;
b) la seconde surface d'action (18) est reliée par voie pneumatique au raccord d'alimentation (1).

11. Agencement de valve selon l'une des revendications précédentes, **caractérisé par** les éléments suivants :
a) il est prévu un raccord de détachement (5) ;
b) le raccord de détachement (5) est relié par voie pneumatique à la chambre de pression de la première surface d'action (17).

12. Agencement de valve selon la revendication 1, **caractérisé par** les éléments suivants :
a) l'agencement de valve (8) comprend un tiroir de valve (10) chargé par un ressort de rappel (11) et présentant deux positions que sont une position de base et une position de déchirure ;
b) la position de base est occupée au moyen d'une force de pression agissant via une surface d'action (18) sur le tiroir de valve (10), lorsque le raccord d'alimentation (1) est sollicité en pression ;
c) la position de déchirure est occupée sous l'effet du ressort de rappel (11) lorsque le raccord d'alimentation (1) est sans pression.

13. Agencement de valve selon la revendication 12, **caractérisé par** les éléments suivants :
a) il est prévu une valve pilote (60) sollicitée par la pression du raccord d'alimentation (1), présentant deux positions que sont une position de départ et une position de commutation ;
b) la force de pression agissant sur le tiroir de valve (10) dépend de la position de la valve pilote (60).

14. Agencement de valve selon la revendication 13, **caractérisé par** les éléments suivants :
a) lorsque la pression appliquée au raccord d'alimentation (1) passe au-dessous d'une valeur seuil de pression fixée, la position de départ est occupée au niveau de la valve pilote (60) sous l'effet d'un ressort (61) ;
b) lorsque la pression appliquée au raccord d'alimentation (1) atteint ou passe au-dessus de la valeur seuil de pression fixée, la position de commutation est occupée au niveau de la valve pilote (60).

15. Agencement de valve selon la revendication 14, **caractérisé en ce que** dans la position de commutation de la valve pilote (60), la force de pression agissant sur le tiroir de valve (10) est augmentée.

16. Agencement de valve selon la revendication 15, **caractérisé en ce que** l'augmentation de la force de pression agissant sur le tiroir de valve (10) est réalisée par une augmentation de la pression.

17. Agencement de valve selon la revendication 15, **caractérisé en ce que** la valve pilote (60) est intégrée dans le tiroir de valve (10).

18. Agencement de valve selon la revendication 17, **caractérisé par** les éléments suivants :
a) dans la position de départ de la valve pilote (60), une liaison avec effet d'étanchement d'un organe de commutation de valve (62) avec un premier siège de valve (63) est établie sous l'effet du ressort (61) ;
b) dans la position de commutation de la valve pilote (60), une liaison avec effet d'étanchement de l'organe de commutation de valve (62) avec un second siège de valve (64) est établie.

19. Agencement de valve selon la revendication 18, **caractérisé en ce que** le niveau de la valeur seuil de pression fixée pour occuper la position de commutation de la valve pilote (60) est déterminé par les propriétés du ressort (61) agissant sur l'organe de commutation de valve (62) et par le diamètre efficace du premier siège de valve (63).

20. Agencement de valve selon la revendication 19, **caractérisé en ce que** pour former une hystérésis de commutation pour la valeur seuil de pression fixée, le diamètre efficace du second siège de valve (64) est choisi supérieur au diamètre efficace du premier siège de valve (63).

21. Agencement de valve selon la revendication 16, **caractérisé en ce que** la valve pilote (60) est agencée dans une partie de boîtier agencée séparément de la partie de boîtier du tiroir de valve (10).

22. Agencement de valve selon la revendication 21, **caractérisé en ce que** la valve pilote (60) est réalisée sous la forme d'une valve à 3 voies/2 positions (70).

23. Agencement de valve selon la revendication 22, **caractérisé en ce que** la valve pilote est réalisée sous la forme d'une combinaison de deux valves à 2 voies/2 positions (68, 69).
